(19) Europäisches Patentamt
European Patent Office
Office européen des brevets

(11) EP 4 595 756 A1

(12) # EUROPEAN PATENT APPLICATION

(43) Date of publication:
**06.08.2025 Bulletin 2025/32**

(21) Application number: **24155124.1**

(22) Date of filing: **31.01.2024**

(51) International Patent Classification (IPC):
***A01N 43/82*** *(2006.01)* ***A01P 13/02*** *(2006.01)*

(52) Cooperative Patent Classification (CPC):
(C-Sets available)
**A01P 13/02; A01N 43/82** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Bayer Aktiengesellschaft**
**51373 Leverkusen (DE)**

(72) Inventor: **The designation of the inventor has not yet been filed**

(74) Representative: **BIP Patents**
**c/o Bayer Intellectual Property GmbH**
**Alfred-Nobel-Straße 50**
**40789 Monheim am Rhein (DE)**

(54) **HERBICIDAL COMBINATIONS**

(57) The invention relates to herbicidal active compound combinations which comprise substituted isoxazolincarboxamides or agrochemical acceptable salts thereof and substituted N-phenyluracile. They can be used for the control of weeds in various crops.

EP 4 595 756 A1

(52) Cooperative Patent Classification (CPC): (Cont.)

C-Sets
**A01N 43/82, A01N 43/80, A01N 43/54,**
**A01N 43/84**

## Description

The invention relates to novel herbicidal active compound combinations which comprise substituted isoxazolincarboxamides or agrochemical acceptable salts thereof and substituted N-phenyluracile. They can be used with particularly good results for the control of weeds in various crops of useful plants.

Substituted N-phenyluracile are already known as effective herbicides from the patent applications with the publication number WO 2021/139482 A1, WO 2010/145992 A1, WO 2010/038953 A1, WO 2016/095768 A1, WO 2021/143677 A1, WO 2023/285222 A1, US 6403534 B1, WO 2023/228935 A1, US 6403534 B1, WO 2023/228935 A1. The compounds can be used either non-selective or selective depending on the timing and crops. However, the activity and compatibility with crop plants are not entirely satisfactory under all conditions.

Substituted isoxazolincarboxamides are already known as effective herbicides from WO 2018/228985 A1 and WO 2019/145245 A1. The compounds can be used either non-selective or selective depending on the timing and crops. However, the activity and compatibility with crop plants are not entirely satisfactory under all conditions.

Surprisingly, it has now been found that certain substituted isoxazolincarboxamides, when used together with substituted N-phenyluracile described below, can be used particularly advantageously as broad-spectrum combination preparations for the control of weeds in crops of useful plants, for example, in cereals, maize and soybean excersing a significant synergistic effect.

The invention provides herbicidal combinations comprising

(a) substituted isoxazolincarboxamides of the formula (I) or agrochemical acceptable salts thereof

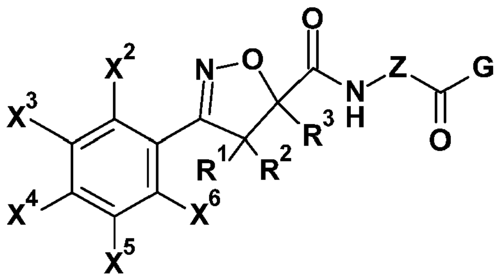

**(I)**

in which

| | |
|---|---|
| G | represents $OR^4$ or $NR^7R^8$ |
| $R^1$ and $R^2$ | each represent hydrogen; |
| $R^3$ | represents (Ci-Cs)-alkyl, $(C_3-C_6)$-cycloalkyl, $(C_2-C_5)$-alkenyl, $(C_2-C_5)$-alkinyl or $(C_1-C_5)$-alkoxy each optionally substitued "m" times by substituents from the group consisting of halogen, cyano, (Ci-Cs)-alkoxy and hydroxy; |
| $R^4$ | represents hydrogen,<br>or<br>represents $(C_1-C_{12})$-alkyl, $(C_3-C_7)$-cycloalkyl, $(C_3-C_7)$-cycloalkyl-$(C_1-C_8)$-alkyl, $(C_2-C_8)$-alkenyl, $(C_5-C_6)$-cycloalkenyl, $(C_1-C_4)$-alkylphenyl or $(C_2-C_8)$-alkinyl each optionally substitued "m" times by substituents from the group consisting of halogen, cyano, $(C_1-C_6)$-alkoxy, $(C_1-C_6)$-alkoxycarbonyl, hydroxy, $S(O)_nR^5$; |
| $R^5$ | represents $(C_1-C_8)$-alkyl, $(C_2-C_8)$-alkenyl, $(C_3-C_6)$-cycloalkyl, benzyl, $CON((C_1-C_3)\text{-alkyl})_2$ or $(C_1-C_8)$-alkyl-C(O)-$(C_1-C_8)$-alkyl each optionally substitued "m" times by substituents from the group consisting of halogen and cyano; |
| $R^6$ | represents hydrogen,<br>or<br>represents $(C_1-C_8)$-alkyl, $(C_3-C_6)$-cycloalkyl, $(C_3-C_8)$-alkenyl or $(C_3-C_8)$-alkinyl each optionally substitued "m" times by substituents from the group consisting of halogen, cyano und $(C_1-C_2)$-alkoxy; |
| $R^7$, $R^8$ | independently of each other represent hydrogen, $(C_1-C_6)$-alkoxycarbonyl-$(C_1-C_6)$-alkyl, $N((C_1-C_3)\text{-alkyl})_2$, $S(O)_nR^5$, |

or

$R^7$ and $R^8$ together with the nitrogen atom to which they are attached form a saturated or partially or fully unsaturated five-, six-, or seven-membered ring which may contain apart from the nitrogen ataom "r" carbon atoms, "o" oxygen atoms and is optionally substitued "m" times by substituents from the group consisting of halogen, $(C_1-C_6)$-alkyl, halogen-$(C_1-C_6)$-alkyl, oxo, $CO_2R^6$;

Z represents Z-1 to Z-8:

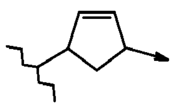
Z-1

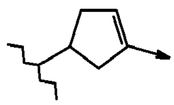
Z-2

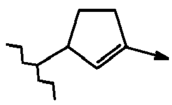
Z-3

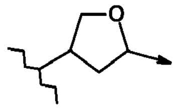
Z-4

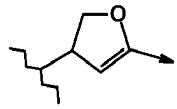

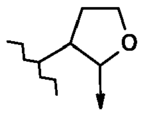
Z-6

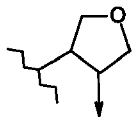
Z-7

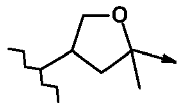
Z-8

whereas the arrow represents the bonding to the group CO-G of the formula (I);

$X^2$, $X^4$ and $X^6$ independently of one another represent hydrogen or fluorine;

$X^3$ and $X^5$ independently of one another represent hydrogen, chlorine, cyano or fluorine;
or
represents $(C_1-C_3)$-Alkyl, $(C_1-C_3)$-Alkoxy each optionally substitued "m" times by substituents from the group consisting of fluorine or chlorine;

m represents 0, 1, 2, 3, 4 or 5;

n represents 0, 1 or 2;

o represents 0, 1 or 2;

r represents 3, 4, 5 or 6;

and
(b) one or more of B1 to B35 specified in table 1 below:

**Table 1**

| (b) | IUPAC Name | CAS Number/Common Name | Publication |
|---|---|---|---|
| B1 | ethyl 3-{2-chloro-4-fluoro-5-[3-methyl-2,6-dioxo-4-(trifluoromethyl)-3,6-dihydropyrimidin-1 (2H)-yl]phenyl} -5 - methyl-4,5-dihydro-1,2-oxazole-5-carboxylate | 1949837-17-5 | WO 2016/095768 A1 |
| B2 | 3-[2-chloro-5-(3,5-dimethyl-2,6-dioxo-4-sulfanylidene-1,3,5-triazinan-1-yl)-4-fluorophenyl]-5-methyl-4,5-dihydro-1,2-oxazole-5-carboxylic acid | 2558200-03-04 | WO 2021/143677 A1 |
| B3 | methyl 2-{[(E)-{2-chloro-4-fluoro-5-[3-methyl-2,6-dioxo-4-(trifluoromethyl)-3,6-dihydropyrimidin-1(2H)-yl]benzylidene}amino]oxy}propanoate | 2669111-31-1; Flufenoximacil (racemic) | WO 2021/139482 A1 |

(continued)

| (b) | IUPAC Name | CAS Number/Common Name | Publication |
|---|---|---|---|
| B4 | methyl-(2R)-2-{ [(E)-{2-chloro-4-fluoro-5-[3-methyl-2,6-dioxo-4-(trifluoromethyl)-3,6-dihydropyrimidin-1(2H)-yl]benzylidene}amino]oxy}propanoate | 2759011-88-4; Flufenoximacil (R-Enantiomer) | WO 2021/139482 A1 |
| B5 | methyl-(2S)-2- { [(E)-{2-chloro-4-fluoro-5-[3-methyl-2,6-dioxo-4-(trifluoromethyl)-3,6-dihydropyrimidin-1(2H)-yl]benzylidene}amino]oxy}propanoate | Flufenoximacil (S-Enantiomer) | WO 2021/139482 A1 |
| B6 | trifludimoxazin | | WO 2010/145992 A1 |
| B7 | tiafenacil | | WO 2010/038953 A2 |
| B8 | methyl 3-{2-chloro-4-fluoro-5-[3-methyl-2,6-dioxo-4-(trifluoromethyl)-3,6-dihydropyrimidin-1 (2H)-yl]phenyl}-3a,4,5,6-tetrahydro-6aH-cyclopenta[d] [1 ,2]oxazole-6a-carboxylate | | WO 2021/139482 A1 |
| B9 | ethyl 3-{2-chloro-4-fluoro-5-[3-methyl-2,6-dioxo-4-(trifluoromethyl)-3,6-dihydropyrimidin-1(2H)-yl]phenyl} - 3a,4,5,6-tetrahydro-6aH-cyclopenta[d][1,2]oxazole-6a-carboxylate | | WO 2021/139482 A1 |
| B10 | methyl 3-{2-chloro-4-fluoro-5-[3-methyl-2,6-dioxo-4-(trifluoromethyl)-3,6-dihydropyrimidin-1 (2H)-yl]phenyl}-6-methyl-3a,4,5,6-tetrahydro-6aH-cyclopenta[d] [1 ,2]oxazole-6a-carboxylate | | WO 2021/139482 A1 |
| B11 | 3-{2-chloro-4-fluoro-5-[3-methyl-2,6-dioxo-4-(trifluoromethyl)-3,6-dihydropyrimidin-1(2H)-yl]phenyl} -6-methyl-3a,4,5,6-tetrahydro-6aH-cyclopenta[d][1,2]oxazole-6a-carboxylic acid | | WO 2021/139482 A1 |
| B12 | 3-{2-chloro-4-fluoro-5-[3-methyl-2,6-dioxo-4-(trifluoromethyl)-3,6-dihydropyrimidin-1(2H)-yl]phenyl} - 3a,4,5,6-tetrahydro-6aH-cyclopenta[d][1,2]oxazole-6a-carboxylic acid | | WO2021/139482 A1 |
| B13 | ethyl [(3-{2-chloro-5-[4-(1,1-difluoroethyl)-3-methyl-2,6-dioxo-3,6-dihydropyrimidin-1(2H)-yl]-4-fluorophenoxy}pyridin-2-yl)oxy]acetate | 2892260-46-5 | WO 2023/285222 A1 |
| B14 | [(3-{2-chloro-5-[4-(1,1-difluoroethyl)-3-methyl-2,6-dioxo-3,6-dihydropyrimidin-1(2H)-yl]-4-fluorophenoxy } pyridin-2-yl)oxy] acetic acid | 2892260-49-8 | WO 2023/285222 A1 |
| B15 | ethyl (2-{2-chloro-5-[4-(1,1-difluoroethyl)-3-methyl-2,6-dioxo-3,6-dihydropyrimidin-1(2H)-yl]-4-fluorophenoxy}phenoxy) acetate | 2892260-47-6 | WO 2023/285222 A1 |
| B16 | (2-{2-chloro-5-[4-(1,1-difluoroethyl)-3-methyl-2,6-dioxo-3,6-dihydropyrimidin-1(2H)-yl]-4-fluorophenoxy}phenoxy)acetic acid | 2892260-48-7 | WO 2023/285222 A1 |
| B17 | ethyl (2-{2-chloro-4-fluoro-5-[4-(1-fluoroethyl)-3-methyl-2,6-dioxo-3,6-dihydropyrimidin-1(2H)-yl] phenoxy } phenoxy)acetate | 2892260-50-1 | WO 2023/285222 A1 |
| B18 | 2-methoxyethyl [(3-{2-chloro-5-[4-(1,1-difluoroethyl)-3-methyl-2,6-dioxo-3,6-dihydropyrimidin-1(2H)-yl]-4-fluorophenoxy } pyridin-2-yl)oxy]acetate | 2892260-51-2 | WO 2023/285222 A1 |
| B19 | tetrahydrofuran-2-ylmethyl [(3-{2-chloro-5-[4-(1,1-difluoroethyl)-3-methyl-2,6-dioxo-3,6-dihydropyrimidin-1(2H)-yl]-4-fluorophenoxy}pyridin-2-yl)oxy]acetate | 2892260-52-3 | WO 2023/285222 A1 |

(continued)

| (b) | IUPAC Name | CAS Number/Common Name | Publication |
|---|---|---|---|
| B20 | cyanomethyl [(3-{2-chloro-5-[4-(1,1-difluoroethyl)-3-methyl-2,6-dioxo-3,6-dihydropyrimidin-1(2H)-yl]-4-fluorophenoxy}pyridin-2-yl)oxy]acetate | 2892260-53-4 | WO 2023/285222 A1 |
| B21 | methyl (2-{2-chloro-5-[4-(1,1-difluoroethyl)-3-methyl-2,6-dioxo-3,6-dihydropyrimidin-1(2H)-yl]-4-fluorophenoxy } phenoxy) (methoxy)acet ate | 2892260-54-5 | WO 2023/285222 A1 |
| B22 | methyl (2-{2-bromo-5-[4-(1,1-difluoroethyl)-3-methyl-2,6-dioxo-3,6-dihydropyrimidin-1(2H)-yl]-4-fluorophenoxy } phenoxy) (methoxy)acet ate | 2892260-55-6 | WO 2023/285222 A1 |
| B23 | [(3-{2-bromo-5-[4-(1,1-difluoroethyl)-3-methyl-2,6-dioxo-3,6-dihydropyrimidin-1(2H)-yl]-4-fluorophenoxy } pyridin-2-yl)oxy] acetic acid | 2892260-56-7 | WO 2023/285222 A1 |
| B24 | ethyl [(3-{2-bromo-5-[4-(1,1-difluoroethyl)-3-methyl-2,6-dioxo-3,6-dihydropyrimidin-1(2H)-yl]-4-fluorophenoxy}pyridin-2-yl)oxy]acetate | 2892260-57-8 | WO 2023/285222 A1 |
| B25 | 2-methoxyethyl [(3-{2-bromo-5-[4-(1,1-difluoroethyl)-3-methyl-2,6-dioxo-3,6-dihydropyrimidin-1(2H)-yl]-4-fluorophenoxy } pyridin-2-yl)oxy]acetate | 2892260-58-9 | WO 2023/285222 A1 |
| B26 | tetrahydrofuran-2-ylmethyl [(3-{2-bromo-5-[4-(1,1-difluoroethyl)-3-methyl-2,6-dioxo-3,6-dihydropyrimidin-1(2H)-yl]-4-fluorophenoxy}pyridin-2-yl)oxy]acetate | 2892260-59-0 | WO 2023285222 A1 |
| B27 | 2-ethoxy-2-oxoethyl 1-{2-chloro-4-fluoro-5-[3-methyl-2,6-dioxo-4-(trifluoromethyl)-3,6-dihydropyrimidin-1(2H)-yl]phenoxy} cyclopropanecarboxylate | 1101020-13-6 | US 6403534 B1 |
| B28 | {[(1-{2-chloro-4-fluoro-5-[3-methyl-2,6-dioxo-4-(trifluoromethyl)-3,6-dihydropyrimidin-1(2H)-yl] phenoxy } cyclopropyl) carbonyl] oxy } acetic acid | 1101020-12-5 | US 6403534 B1 |
| B29 | 2-methoxy-2-oxoethyl 1-{2-chloro-4-fluoro-5-[3-methyl-2,6-dioxo-4-(trifluoromethyl)-3,6-dihydropyrimidin-1(2H)-yl]phenoxy}cyclopropanecarboxylate | 1101021-05-9 | US 6403534 B1 |
| B30 | 1-ethoxy-1-oxopropan-2-yl 1-{2-chloro-4-fluoro-5-[3-methyl-2,6-dioxo-4-(trifluoromethyl)-3,6-dihydropyrimidin-1(2H)-yl]phenoxy}cyclopropanecarboxylate | 3017139-36-2 | US 6403534 B1 |
| B31 | 2-{[(1-{2-chloro-4-fluoro-5-[3-methyl-2,6-dioxo-4-(trifluoromethyl)-3,6-dihydropyrimidin-1(2H)-yl] phenoxy } cyclopropyl) carbonyl] oxy } propanoic acid | 1101021-04-8 | US 6403534 B1 |
| B32 | 1-methoxy-1-oxopropan-2-yl 1-{2-chloro-4-fluoro-5-[3-methyl-2,6-dioxo-4-(trifluoromethyl)-3,6-dihydropyrimidin-1(2H)-yl]phenoxy} cyclopropanecarboxylate | 1101021-03-7 | US 6403534 B1 |
| B33 | 1-ethoxy-2-methyl-1-oxopropan-2-yl 1-{2-chloro-4-fluoro-5-[3-methyl-2,6-dioxo-4-(trifluoromethyl)-3,6-dihydropyrimidin-1(2H)-yl]phenoxy}cyclopropanecarboxylate | 3017139-37-3 | WO 2023/228935 A1 |
| B34 | 1-ethoxy-1-oxobutan-2-yl 1-{2-chloro-4-fluoro-5-[3-methyl-2,6-dioxo-4-(trifluoromethyl)-3,6-dihydropyrimidin-1(2H)-yl]phenoxy}cyclopropanecarboxylate | 3017139-38-4 | US 6403534 B1 |

(continued)

| (b) | IUPAC Name | CAS Number/Common Name | Publication |
|---|---|---|---|
| B35 | 1-(ethoxycarbonyl)cyclopropyl 1-{2-chloro-4-fluoro-5-[3-methyl-2,6-dioxo-4-(trifluoromethyl)-3,6-dihydropyrimidin-1(2H)-yl]phenoxy}cyclopropanecarboxylate | 3017139-39-5 | WO 2023/228935 A1 |

The preparation of the compounds of the herbicidal combination is known. Compounds (a) are prepared according to the procedure disclosed in WO 2018/228985 A1. Compounds (b) are prepared according to the procedures discloed in WO 2021/139482 A1, WO 2010/145992 A1, WO 2010/038953 A1, WO 2016/095768 A1, WO 2021/143677 A1, WO 2023/285222 A1, US 6403534 B1, WO 2023/228935 A1, US 6403534 B1, WO 2023/228935 A1.

Definitions

Halogen represents radicals of fluorine, chlorine, bromine and iodine. Preference is given to the radicals of fluorine and chlorine.

Alkyl means saturated straight-chain or branched hydrocarbyl radicals having the number of carbon atoms specified in each case, e.g. $C_1$-$C_6$-alkyl such as methyl, ethyl, propyl, 1-methylethyl, butyl, 1-methylpropyl, 2-methylpropyl, 1,1-dimethylethyl, pentyl, 1-methylbutyl, 2-methylbutyl, 3-methylbutyl, 2,2-dimethylpropyl, 1-ethylpropyl, hexyl, 1,1-dimethylpropyl, 1,2-dimethylpropyl,1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl and 1-ethyl-2-methylpropyl.

Alkenyl means unsaturated straight-chain or branched hydrocarbyl radicals having the number of carbon atoms specified in each case and one double bond in any position, e.g. $C_2$-$C_6$-alkenyl such as ethenyl, 1-propenyl, 2-propenyl, 1-methylethenyl, 1-butenyl, 2-butenyl, 3-butenyl, 1-methyl-1-propenyl, 2-methyl-1-propenyl, 1-methyl-2-propenyl, 2-methyl-2-propenyl, 1-pentenyl, 2-pentenyl, 3-pentenyl, 4-pentenyl, 1-methyl-1-butenyl, 2-methyl-1-butenyl, 3-methyl-1-butenyl, 1-methyl-2-butenyl, 2-methyl-2-butenyl, 3-methyl-2-butenyl, 1-methyl-3-butenyl, 2-methyl-3-butenyl, 3-methyl-3-butenyl, 1,1-dimethyl-2-propenyl, 1,2-dimethyl-1-propenyl, 1,2-dimethyl-2-propenyl, 1-ethyl-1-propenyl, 1-ethyl-2-propenyl, 1-hexenyl, 2-hexenyl, 3-hexenyl, 4-hexenyl, 5-hexenyl, 1-methyl-1-pentenyl, 2-methyl-1-pentenyl, 3-methyl-1-pentenyl, 4-methyl-1-pentenyl, 1-methyl-2-pentenyl, 2-methyl-2-pentenyl, 3-methyl-2-pentenyl, 4-methyl-2-pentenyl, 1-methyl-3-pentenyl, 2-methyl-3-pentenyl, 3-methyl-3-pentenyl, 4-methyl-3-pentenyl, 1-methyl-4-pentenyl, 2-methyl-4-pentenyl, 3-methyl-4-pentenyl, 4-methyl-4-pentenyl, 1,1-dimethyl-2-butenyl, 1,1-dimethyl-3-butenyl, 1,2-dimethyl-1-butenyl, 1,2-dimethyl-2-butenyl, 1,2-dimethyl-3-butenyl, 1,3-dimethyl-1-butenyl, 1,3-dimethyl-2-butenyl, 1,3-dimethyl-3-butenyl, 2,2-dimethyl-3-butenyl, 2,3-dimethyl-1-butenyl, 2,3-dimethyl-2-butenyl, 2,3-dimethyl-3-butenyl, 3,3-dimethyl-1-butenyl, 3,3-dimethyl-2-butenyl, 1-ethyl-1-butenyl, 1-ethyl-2-butenyl, 1-ethyl-3-butenyl, 2-ethyl-1-butenyl, 2-ethyl-2-butenyl, 2-ethyl-3-butenyl, 1,1,2-trimethyl-2-propenyl, 1-ethyl-1-methyl-2-propenyl, 1-ethyl-2-methyl-1-propenyl and 1-ethyl-2-methyl-2-propenyl.

Alkynyl represents a straight-chain or branched hydrocarbyl groups having 2 to 8, preferably 2 to 6, carbon atoms and one triple bond in any position. Non-limiting examples include ethynyl, prop-1-ynyl, prop-2-ynyl, but-1-ynyl, but-2-ynyl, but-3-ynyl, 1-methylprop-2-ynyl, pent-1-ynyl, pent-2-ynyl, pent-3-ynyl, pent-4-ynyl, 1-methylbut-2-ynyl, 1-methylbut-3-ynyl, 2-methylbut-3-ynyl, 3-methylbut-1-ynyl, 1,1-dimethylprop-2-ynyl, 1-ethylprop-2-ynyl, hex-1-ynyl, hex-2-ynyl, hex-3-ynyl, hex-4-ynyl, hex-5-ynyl, 1-methylpent-2-ynyl, 1-methylpent-3-ynyl, 1-methylpent-4-ynyl, 2-methylpent-3-ynyl, 2-methylpent-4-ynyl, 3-methylpent-1-ynyl, 3-methylpent-4-ynyl, 4-methylpent-1-ynyl, 4-methylpent-2-ynyl, 1,1-dimethylbut-2-ynyl, 1,1-dimethylbut-3-ynyl, 1,2-dimethylbut-3-ynyl, 2,2-dimethylbut-3-ynyl, 3,3-dimethylbut-1-ynyl, 1-ethylbut-2-ynyl, 1-ethylbut-3-ynyl, 2-ethylbut-3-ynyl and 1-ethyl-1 -methylprop-2-ynyl.

Cycloalkyl means a carbocyclic saturated ring system having preferably 3-8 ring carbon atoms, for example cyclopropyl, cyclobutyl, cyclopentyl or cyclohexyl. In the case of optionally substituted cycloalkyl, cyclic systems with substituents are included, also including substituents with a double bond on the cycloalkyl radical, for example an alkylidene group such as methylidene.

Alkoxy means saturated straight-chain or branched alkoxy radicals having the number of carbon atoms specified in each case, for example $C_1$-$C_6$-alkoxy such as methoxy, ethoxy, propoxy, 1-methylethoxy, butoxy, 1-methylpropoxy, 2-methylpropoxy, 1,1-dimethylethoxy, pentoxy, 1-methylbutoxy, 2-methylbutoxy, 3-methylbutoxy, 2,2-dimethylpropoxy, 1-ethylpropoxy, hexoxy, 1,1-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy and 1-ethyl-2-methylpropoxy. Halogen-substituted alkoxy means straight-chain or branched alkoxy radicals having the number of carbon atoms specified in each case, where some or all of the hydrogen atoms in these groups may be replaced by halogen atoms as specified above, e.g. $C_1$-$C_2$-haloalkoxy such as chloromethoxy, bromomethoxy, dichloromethoxy, trichloromethoxy, fluoromethoxy, difluoromethoxy, trifluoromethoxy, chlorofluoromethoxy, dichlorofluoromethoxy, chlorodifluoromethoxy, 1-chloroethoxy, 1-bromoethoxy, 1-fluoroethoxy, 2-fluoroethoxy, 2,2-difluoroethoxy, 2,2,2-trifluoroethoxy, 2-chloro-2-fluoroethoxy, 2-chloro-1,2-difluoroethoxy, 2,2-dichloro-2-fluoroethoxy, 2,2,2-trichloroethoxy, pentafluoroethoxy and 1,1,1-trifluoroprop-2-oxy.

The compounds according to the invention are defined in general terms by the formula **(I).** Preferred substituents or ranges of the radicals given in the formulae mentioned above and below are illustrated hereinafter:

Preferred are herbicidal combinations wherein compound of formula (**I**) is one of the compounds of the formula (**Ia**) or agrochemical acceptable salts thereof

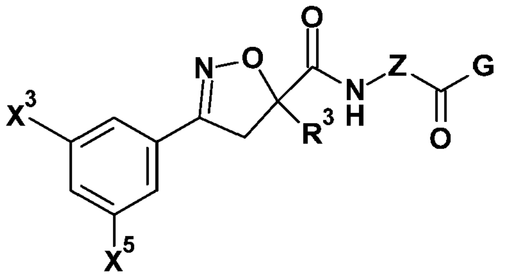

**(Ia)**

in which

$X^3$, $X^5$, $R^3$ and G are as described above;
Z means Z-1a, Z-1b, Z-2a, Z-3a, Z-4a, Z-5a, Z-6a, Z-7a, Z-8a,

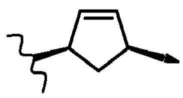
Z-1a

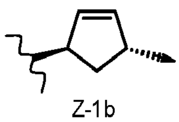
Z-1b

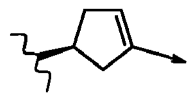
Z-2a

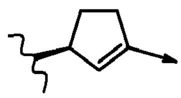
Z-3a

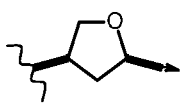
Z-4a

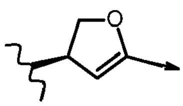
Z-5a

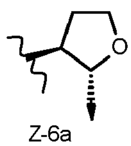
Z-6a

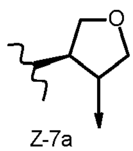
Z-7a

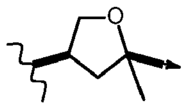
Z-8a

;

wherein Z-4a means the mixture of both structures Z-4b and Z-4c;

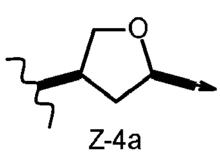
Z-4a

=

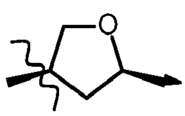
Z-4b

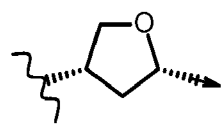
Z-4c

and wherein Z-8a means the mixture of both structures Z-8b and Z-8c

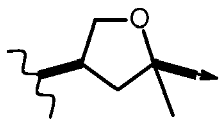
=
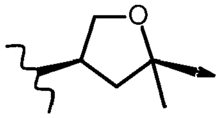
+
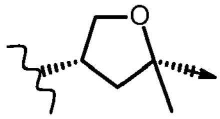

Z-8a Z-8b Z-8c ;

and wherein the arrow means a bond to the group CO-G in formula (**Ia**).

Especially preferred are herbicidal combinations wherein compound of formula (**Ia**) is one of the compounds of table 2 or agrochemical acceptable salts thereof.

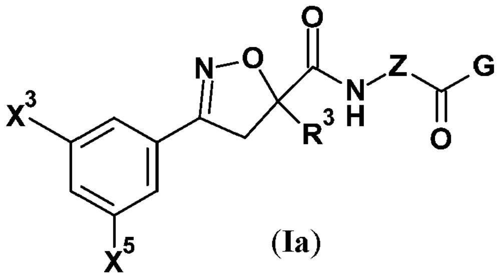

(Ia)

(Ia)

Table 2: Examples for compounds of the formula (**Ia**)

| No. | $X^3$ | $X^5$ | $R^3$ | 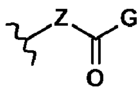 |
|---|---|---|---|---|
| 1.1 | F | F | (R)-$CH_2Cl$ | 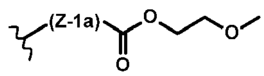 |
| 1.2 | F | CN | (R)-$CF_3$ | 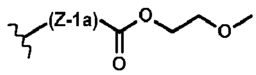 |
| 1.3 | F | F | (R)-$CF_3$ | 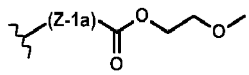 |
| 1.4 | F | H | (R)-$CH_3$ | 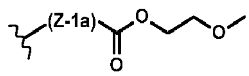 |
| 1.5 | Cl | CN | (R)-$CH_3$ | 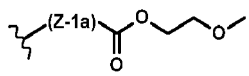 |
| 1.6 | F | H | (S)-vinyl | 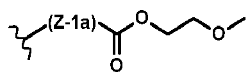 |
| 1.7 | F | F | (R)-$CF_3$ | 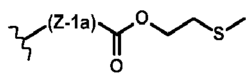 |
| 1.8 | F | $CH_3$ | (R)-$CF_3$ | 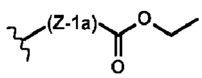 |
| 1.9 | H | H | (R)-$CF_3$ | 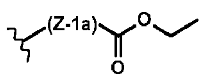 |

(continued)

| No. | $X^3$ | $X^5$ | $R^3$ | 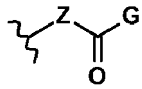 |
|---|---|---|---|---|
| 1.10 | F | F | (R)-$CH_3$ | 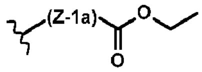 |
| 1.11 | H | H | (R,S)-$CF_3$ | 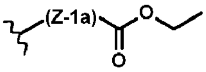 |
| 1.12 | $OCH_3$ | $OCH_3$ | (R,S)-$CF_3$ | 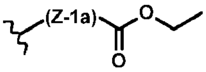 |
| 1.13 | F | F | (R,S)-$CH_3$ | 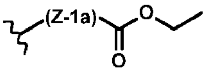 |
| 1.14 | F | F | (S)-vinyl | 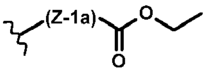 |
| 1.15 | F | F | (R,S)-$OCH_3$ | 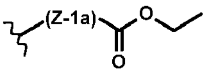 |
| 1.16 | F | F | (R)-$OCH_3$ | 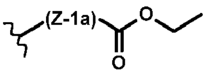 |
| 1.17 | F | F | (R)-$CH_2F$ | 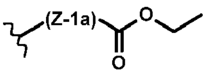 |
| 1.18 | F | H | (R)-$CF_3$ | 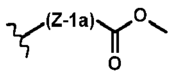 |
| 1.19 | F | F | (R)-$CH_3$ | 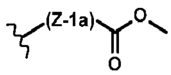 |
| 1.20 | F | H | (R)-$CH_3$ | 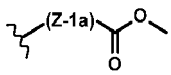 |
| 1.21 | F | Cl | (R)-$CH_3$ | 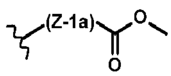 |
| 1.22 | F | $CH_3$ | (R,S)-$CF_3$ | 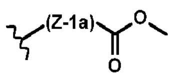 |
| 1.23 | Cl | CN | (R,S)-$CH_3$ | 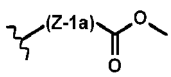 |
| 1.24 | F | CN | (R,S)-$CH_3$ | 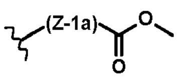 |
| 1.25 | F | H | (S)-vinyl | 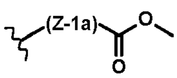 |
| 1.26 | F | F | (S)-vinyl | 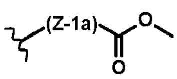 |

(continued)

| No. | $X^3$ | $X^5$ | $R^3$ | 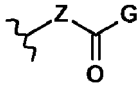 |
|---|---|---|---|---|
| 1.27 | F | F | (R)-$CH_3$ | 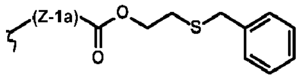 |
| 1.28 | F | H | (R)-$CH_3$ | 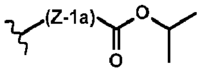 |
| 1.29 | F | F | (R)-$CH_3$ | 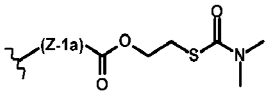 |
| 1.30 | F | F | (R)-$CH_3$ | 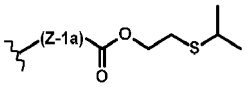 |
| 1.31 | F | F | (R)-$CH_3$ | 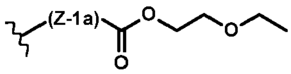 |
| 1.32 | F | H | (R)-$CH_3$ | 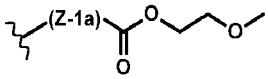 |
| 1.33 | F | F | (R)-$CH_3$ | 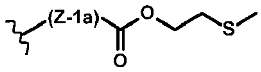 |
| 1.34 | F | F | (R)-$CH_3$ | 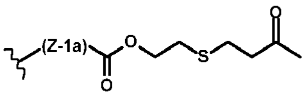 |
| 1.35 | F | F | (R)-$CH_3$ | 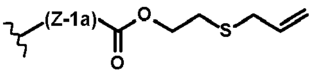 |
| 1.36 | F | F | (R)-$CH_3$ | 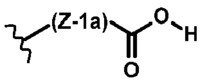 |
| 1.37 | F | F | (R)-$CH_3$ | 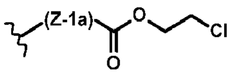 |
| 1.38 | F | F | (R)-$CH_3$ | 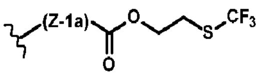 |
| 1.39 | F | H | (R)-$CH_3$ | 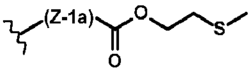 |
| 1.40 | F | F | (R)-$CH_3$ | 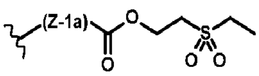 |
| 1.41 | F | F | (R)-$CH_3$ | 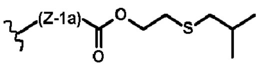 |
| 1.42 | F | F | (R)-$CH_3$ | 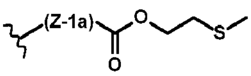 |

(continued)

| No. | $X^3$ | $X^5$ | $R^3$ | 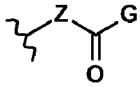 |
|---|---|---|---|---|
| 1.43 | F | CN | (R,S)-$CF_3$ | 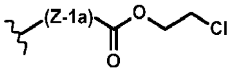 |
| 1.44 | F | CN | (R,S)-$CF_3$ | 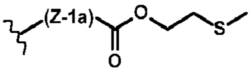 |
| 1.45 | Cl | CN | (R,S)-$CH_3$ | 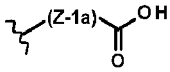 |
| 1.46 | F | F | (R,S)-$CH_3$ | 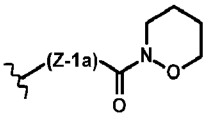 |
| 1.47 | F | F | (R,S)-$CH_3$ | 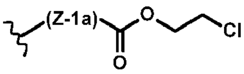 |
| 1.48 | F | F | (R,S)-vinyl | 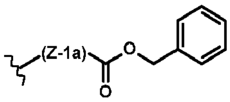 |
| 1.49 | F | F | (R,S)-vinyl | 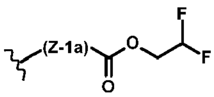 |
| 1.50 | F | F | (S)-vinyl | 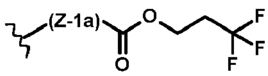 |
| 1.51 | F | H | (S)-vinyl | 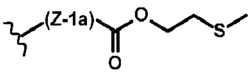 |
| 1.52 | F | F | (S)-vinyl | 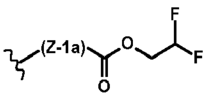 |
| 1.53 | F | Cl | (R,S)-$CH_3$ | 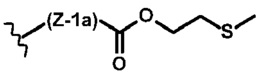 |
| 1.54 | F | F | (R)-cPr | 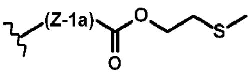 |
| 1.55 | F | F | (R)-$CH_2Cl$ | 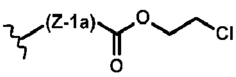 |
| 1.56 | F | F | (R)-$CF_3$ | 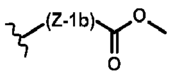 |
| 1.57 | F | F | (S)-vinyl | 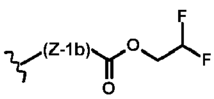 |
| 1.58 | F | F | (S)-vinyl | 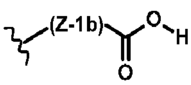 |

(continued)

| No. | $X^3$ | $X^5$ | $R^3$ | 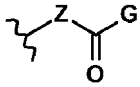 |
|---|---|---|---|---|
| 1.59 | F | H | (R,S)-$CH_3$ | 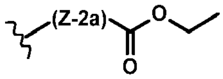 |
| 1.60 | F | F | (R,S)-vinyl | 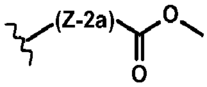 |
| 1.61 | F | F | (R,S)-$CH_3$ | 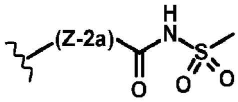 |
| 1.62 | F | F | (R,S)-$CH_3$ | 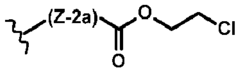 |
| 1.63 | F | F | (R)-$CH_3$ | 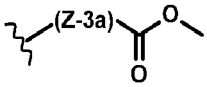 |
| 1.64 | F | F | (R)-$CH_3$ | 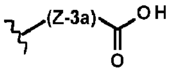 |
| 1.65 | F | $CH_3$ | (S)-vinyl | 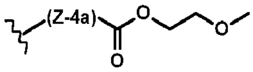 |
| 1.66 | F | F | (S)-vinyl | 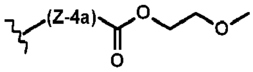 |
| 1.67 | F | H | (R,S)-$CH_3$ | 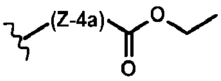 |
| 1.68 | F | F | (S)-vinyl | 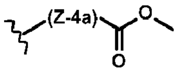 |
| 1.69 | F | F | (S)-vinyl | 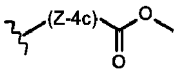 |
| 1.70 | F | F | (S)-vinyl | 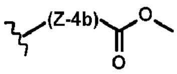 |
| 1.71 | F | $CH_3$ | (S)-vinyl | 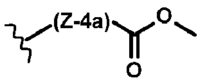 |
| 1.72 | F | F | (R,S)-$OCH_3$ | 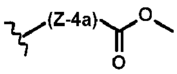 |
| 1.73 | F | F | (R)-$CH_3$ | 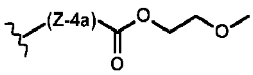 |
| 1.74 | F | F | (R)-$CH_3$ | 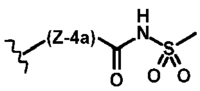 |

(continued)

| No. | $X^3$ | $X^5$ | $R^3$ | 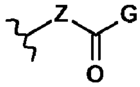 |
|---|---|---|---|---|
| 1.75 | F | F | (R)-$CH_3$ | 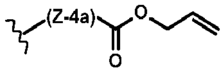 |
| 1.76 | F | F | (R)-$CH_3$ | 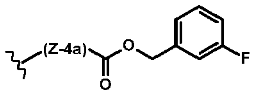 |
| 1.77 | F | H | (R,S)-$CH_3$ | 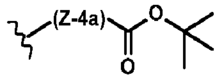 |
| 1.78 | F | H | (R,S)-$CH_3$ | 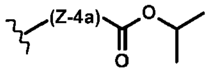 |
| 1.79 | F | H | (R,S)-$CH_3$ | 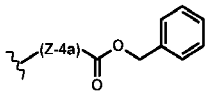 |
| 1.80 | F | F | (S)-vinyl | 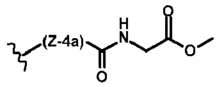 |
| 1.81 | F | F | (S)-vinyl | 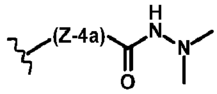 |
| 1.82 | F | F | (S)-vinyl | 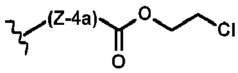 |
| 1.83 | F | F | (S)-vinyl | 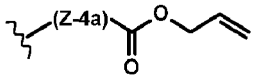 |
| 1.84 | F | F | (S)-vinyl | 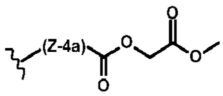 |
| 1.85 | F | $CH_3$ | (S)-vinyl | 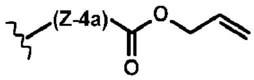 |
| 1.86 | F | $CH_3$ | (S)-vinyl | 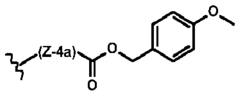 |
| 1.87 | F | F | (S)-vinyl | 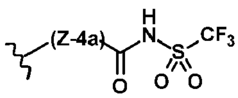 |
| 1.88 | F | F | (R)-$CF_2CH_3$ | 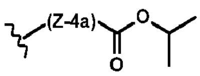 |
| 1.89 | F | $CH_3$ | (S)-vinyl | 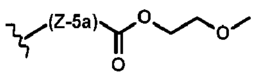 |

(continued)

| No. | $X^3$ | $X^5$ | $R^3$ | 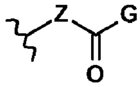 |
|---|---|---|---|---|
| 1.90 | $CH_3$ | $CH_3$ | (S)-vinyl | 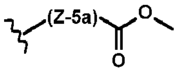 |
| 1.91 | F | F | (S)-vinyl | 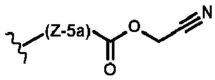 |
| 1.92 | F | F | (R)-$CH_3$ | 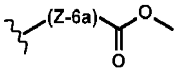 |
| 1.93 | F | F | (R,S)-$CH_3$ | 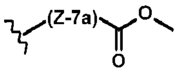 |
| 1.94 | F | F | (R)-$CF_2CH_3$ | 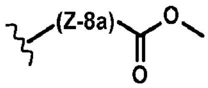 |

*Preferred* is the combination comprising 1.68 and B 1.
*Preferred* is the combination comprising 1.68 and B2.
*Preferred* is the combination comprising 1.68 and B3.
*Preferred* is the combination comprising 1.68 and B4.
*Preferred* is the combination comprising 1.68 and B5.
*Preferred* is the combination comprising 1.68 and B6.
*Preferred* is the combination comprising 1.68 and B7.
*Preferred* is the combination comprising 1.68 and B8.
*Preferred* is the combination comprising 1.68 and B9.
*Preferred* is the combination comprising 1.68 and B 10.
*Preferred* is the combination comprising 1.68 and B 1 1.
*Preferred* is the combination comprising 1.68 and B 12.
*Preferred* is the combination comprising 1.68 and B 13.
*Preferred* is the combination comprising 1.68 and B 14.
*Preferred* is the combination comprising 1.68 and B 15.
*Preferred* is the combination comprising 1.68 and B 16.
*Preferred* is the combination comprising 1.68 and B 17.
*Preferred* is the combination comprising 1.68 and B 18.
*Preferred* is the combination comprising 1.68 and B 19.
*Preferred* is the combination comprising 1.68 and B20.
*Preferred* is the combination comprising 1.68 and B21.
*Preferred* is the combination comprising 1.68 and B22.
*Preferred* is the combination comprising 1.68 and B23.
*Preferred* is the combination comprising 1.68 and B24.
*Preferred* is the combination comprising 1.68 and B25.
*Preferred* is the combination comprising 1.68 and B26.
*Preferred* is the combination comprising 1.68 and B27.
*Preferred* is the combination comprising 1.68 and B28.
*Preferred* is the combination comprising 1.68 and B29.
*Preferred* is the combination comprising 1.68 and B30.
*Preferred* is the combination comprising 1.68 and B31.
*Preferred* is the combination comprising 1.68 and B32.
*Preferred* is the combination comprising 1.68 and B33.
*Preferred* is the combination comprising 1.68 and B34.
*Preferred* is the combination comprising 1.68 and B35.

The above-mentioned herbicidal combinations may be combined with a safener, e.g. isoxadifen-ethyl, cyprosulfamide, mefenpyr-diethyl, cloquintocet-mexyl and methyl-{ [5-(4-chloro-2-fluorophenyl)-1 -(2,4-difluorophenyl)-1H-1,2,4-triazole-3 - yl]oxy}acetate including its hydrates and salts, for example its lithium, sodium, potassium, calcium, magnesium, aluminium, iron, ammonium, quaternary ammonium, sulphonium or phosphonium salts.

Surprisingly, it has now been found that the above-defined active compound combinations of (a) substituted isoxazolincarboxamides of the general formula (I) and/or their salts and (b) one or more of B1 to B35, have particularly high herbicidal activity - higher than the mere addition of the activities of the herbicides applied alone (synergism) - and can be used in various crops, in particular in cereals (especially wheat and barley) and maize, but also in soya beans, potatoes and rice, for the control of weeds.

The active compound combinations according to the invention can be used, for example, in connection with the following plants:

Dicotyledonous weeds of the genera: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum.

Dicotyledonous crops of the genera: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cuburbita, Helianthus.

Monocotyledonous weeds of the genera: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Monocotyledonous crops of the genera: Oryza, Zea, Triticum, Hordeum, Avena, Secale, Sorghum, Panicum, Saccharum, Ananas, Asparagus, Allium.

However, the use of the active compound combinations according to the invention is in no way restricted to these genera, but also extends in the same manner to other plants. According to the invention, crop plants are all plants and plant varieties including transgenic plants and plant varieties, where on transgenic plants and plant varieties it is also possible for synergistic effects to occur.

The invention furthermore relates to a method of reducing crop damage by treating the seed of the crop with the safener before sowing. This can be done in addition to the use of herbicide/safener combinations and compositions comprising thereof, which are highly suitable to protect crops from herbicide damage in pre-and post-emergence treatments.

*Composition*

Compositions within the context of the present invention comprise in addition to the combinations according to the invention one or more further component(s) selected from the group consisting of formulation auxiliaries, additives customary in crop protection, and further agrochemically active compounds.

*Additives*

Additives are for example, fertilizers and colorants.

The active compounds or active compound combinations can be converted into the customary formulations, such as solutions, emulsions, wettable powders, suspensions, powders, dusting agents, pastes, soluble powders, granules, suspoemulsion concentrates, natural and synthetic materials impregnated with active compound, and very fine capsules in polymeric substances.

These formulations are produced in a known manner, for example by mixing the active compounds with extenders, that is liquid solvents and/or solid carriers, optionally with the use of surfactants, that is emulsifiers and/or dispersants and/or foam-formers.

If the extender used is water, it is also possible to use, for example, organic solvents as auxiliary solvents. Suitable liquid solvents are essentially: aromatics, such as xylene, toluene or alkylnaphthalenes, chlorinated aromatics and chlorinated aliphatic hydrocarbons, such as chlorobenzenes, chloroethylenes or methylene chloride, aliphatic hydrocarbons, such as cyclohexane or paraffins, for example petroleum fractions, mineral and vegetable oils, alcohols, such as butanol or glycol, and also their ethers and esters, ketones, such as acetone, methyl ethyl ketone, methyl isobutyl ketone or cyclohexanone, strongly polar solvents, such as dimethylformamide and dimethyl sulphoxide, and also water.

Suitable solid carriers are:

for example ammonium salts and ground natural minerals, such as kaolins, clays, talc, chalk, quartz, attapulgite, montmorillonite or diatomaceous earth, ground synthetic minerals, such as finely divided silica, alumina and silicates, suitable solid carriers for granules are: for example crushed and fractionated natural rocks such as calcite, marble, pumice, sepiolite and dolomite, and also synthetic granules of inorganic and organic meals, and granules of organic material such

as sawdust, coconut shells, maize cobs and tobacco stalks; suitable emulsifiers and/or foam-formers are: for example non-ionic and anionic emulsifiers, such as polyoxyethylene fatty acid esters, polyoxyethylene fatty - alcohol ethers, for example alkylaryl polyglycol ethers, alkylsulphonates, alkyl sulphates, aryl sulphonates and protein hydrolysates; suitable dispersants are: for example lignosulphite waste liquors and methylcellulose.

Tackifiers such as carboxymethylcellulose and natural and synthetic polymers in the form of powders, granules or latices, such as gum arabic, polyvinyl alcohol and polyvinyl acetate, and also natural phospholipids, such as cephalins and lecithins, and synthetic phospholipids, can be used in the formulations. Other possible additives are mineral and vegetable oils.

It is possible to use colorants such as inorganic pigments, for example iron oxide, titanium oxide and Prussian Blue, and organic dyestuffs, such as alizarin dyestuffs, azo dyestuffs and metal phthalocyanine dyestuffs, and trace nutrients such as salts of iron, manganese, boron, copper, cobalt, molybdenum and zinc.

The formulations generally comprise from 0.1 to 95 per cent by weight of active compounds including the safeners, preferably between 0.5 and 90%.

The active compound combinations according to the invention are generally used in the form of finished formulations. However, the active compounds contained in the active compound combinations can also be mixed in individual formulations when used, i.e. in the form of tank mixes.

The novel active compound combinations, as such or in their formulations, can furthermore be used as a mixture with other known herbicides, finished formulations or tank mixes again being possible. A mixture with other known active compounds, such as fungicides, insecticides, acaricides, nematicides, bird repellents, growth factors, plant nutrients and agents which improve soil structure, is also possible. For certain intended uses, in particular in the post-emergence method, it may furthermore be advantageous to include, as further additives in the formulations, mineral or vegetable oils which are tolerated by plants (for example the commercial preparation "Rako Binol"), or ammonium salts such as, for example, ammonium sulphate or ammonium thiocyanate.

The novel active compound combinations can be used as such, in the form of their formulations or the use forms prepared therefrom by further dilution, such as ready-to-use solutions, suspensions, emulsions, powders, pastes and granules. They are used in the customary manner, for example by washing, spraying, atomizing, dusting or scattering.

The advantageous effect of the crop plant compatibility of the active compound combinations according to the invention is particularly highly pronounced at certain amounts of herbicide and safener.

The amounts of the active compound combinations according to the invention applied can be varied within a certain range; they depend, inter alia, on the weather and on soil factors.

In general, the application rates of the *herbicide* are between 0.1 and 1000 g per ha, preferably between 0.1 and 100 g per ha, most preferably between 0.1 and 10 g per ha. In general, the application rates of the *safener* are between 1 and 1000 g per ha, preferably between 10 and 200 g per ha.

In *seed treatment applications* the application rates of the *safener* are between 0,01 and 2 g per kg seed, preferably between 0,1 and 1 g per kg seed.

The active compound combinations according to the invention can be applied before and after emergence of the plants, that is to say by the pre-emergence and post-emergence method.

**Use Examples:**

**Tank-mix; post-emergence**

A) Method Description

Seeds of crops (spring wheat, TRZAS; spring barley, HORVS; maize, ZEAMA) were placed in sandy loam soil in peat pots, covered with soil and cultivated in a greenhouse under good growth conditions. Two to three weeks after sowing, the test plants were treated at the 1 to 3-leaf stage. The herbicide/safener active compound combinations according to the invention, formulated as wettable powders or emulsion concentrates, and, in parallel tests, the correspondingly formulated individual active compounds were sprayed onto the green parts of the plants in various dosages using an amount of water of 300 l/ha (converted).

The pots were returned under good growing conditions in a glasshouse and a visual assessment of herbicidal effects was made at intervals from 1 to 3 weeks after herbicide application (DAT = days after treatment). Assessment was on a percentage basis in comparison with untreated control plants (0% = no injury, 100% = complete kill).

The effectiveness of the safener treatment is displayed as: Reduction [Difference] = herbicide damage without safener - herbicide damage with safener

$$\text{Reduction [\%]} = (\text{Reduction [Difference]} * 100) / \text{herbicide damage without safener}$$

B) Tables with Data

**Treatment 1 day before**

A) Method Description

Seeds of crops (spring wheat, TRZAS; spring barley, HORVS; maize, ZEAMA) were placed in sandy loam soil in pots of a diameter of 7-8 cm, covered with soil, and cultivated in a greenhouse under good growth conditions until plants were at the 1-3 leaf stage (BBCH 11-13). For split safener and herbicide treatment, first the safener was applied followed by the herbicide treatment on the following day. The safener and herbicides were formulated as WP and sprayed onto the green parts of the plants as an aqueous suspension at an equivalent water application rate of 300 l/ha, with addition of wetting agent and adjuvants (e.g. Mero, 1.5 l/ha; ammonium sulphate, 2 kg/ha). An equivalent set of plants was treated with the herbicides but without the prior safener treatment.

After application, the test plants were kept in the greenhouse under good growth conditions. 10 and 21 days after treatment (DAT) with the herbicide, % crop damage observed on the treated plants was scored visually in comparison to control plants that had not received any safener or herbicide treatment.

The effectiveness of the safener treatment is displayed as: Reduction [Difference] = herbicide damage without safener - herbicide damage with safener

$$\text{Reduction [\%]} = (\text{Reduction [Difference]} * 100) / \text{herbicide damage without safener}$$

B) Tables with Data

**Seed Treatment; pre-emergence**

A) Method Description

For the safener seed treatment, sufficient seeds of the respective crops (spring wheat, TRZAS; spring barley, HORVS; maize, ZEAMA) were weighed into screw top glass bottles approximately twice the volume of the seeds.

The specified safeners, formulated as wettable powder (WP) were weighed out so that the specified rates (g a.i./kg seed) would be obtained, dissolved in water (1ml water per 10g of seeds), and added to the seeds to produce a slurry.

The bottles were capped and then placed in an overhead shaker (set at medium speed for ca. 60 minutes) so that the seeds were evenly coated with the slurry. The bottles were uncapped and the seeds were either placed on paper and dried for an interval of 3-4 hours prior to sowing, or directly sown. Seeds were placed in sandy loam soil in pots of a diameter of 7-8 cm, and covered with soil.

Pre-emergence application of the specified herbicides was done subsequently, on two sets of plants:

a) seed treatment with safener, as described above
b) no safener treatment

The herbicides were formulated as WP and was sprayed onto the soil surface as an aqueous suspension at an equivalent water application rate of 300 l/ha.

After application, the test plants were kept in the greenhouse under good growth conditions. At intervals up to 4 weeks after application (=28 days after treatment; DAT), % crop damage observed on the treated plants was scored visually in comparison to control plants that had not received any safener or herbicide treatment.

Values in the table below are mean values of at least 2 replicates. The effectiveness of the safener treatment is displayed as: Reduction [Difference] = herbicide damage without safener - herbicide damage with safener

$$\text{Reduction [\%]} = (\text{Reduction [Difference]} * 100) / \text{herbicide damage without safener}$$

B) Tables with Data

**Seed Treatment; post-emergence**

A) Method Description

For the safener seed treatment, sufficient seeds of the respective crops (spring wheat, TRZAS; spring barley, HORVS; maize, ZEAMA) were weighed into screw top glass bottles approximately twice the volume of the seeds.

The specified safeners, formulated as wettable powder (WP) were weighed out so that the specified rates (g a.i./kg seed) would be obtained, dissolved in water (1ml water per 10g of seeds), and added to the seeds to produce a slurry.

The bottles were capped and then placed in an overhead shaker (set at medium speed for ca. 60 minutes) so that the seeds were evenly coated with the slurry. The bottles were uncapped and the seeds were either placed on paper and dried for an interval of 3-4 hours prior to sowing, or directly sown. Seeds were placed in sandy loam soil in pots of a diameter of 7-8 cm, covered with soil, and cultivated in a greenhouse under good growth conditions.

Post-emergence application of the specified herbicides was done when the plants had reached growth stage BBCH11-13, on two sets of plants:

a) seed treatment with safener, as described above b) no safener treatment

The herbicides were formulated as WP and sprayed onto the green parts of the plants as an aqueous suspension at an equivalent water application rate of 300 l/ha, with addition of wetting agent and adjuvants (e.g. Mero, 1.5 l/ha; ammonium sulphate, 2 kg/ha)

After application, the test plants were kept in the greenhouse under good growth conditions. 10 and 21 days after treatment (DAT) with the herbicide, % crop damage observed on the treated plants was scored visually in comparison to control plants that had not received any safener or herbicide treatment.

Values in the table below are mean values of at least 2 replicates. The effectiveness of the safener treatment is displayed as: Reduction [Difference] = herbicide damage without safener - herbicide damage with safener Reduction [%] = (Reduction [Difference] * 100) / herbicide damage without safener

B) Tables with Data

## Claims

**1.** Combinations comprising

(a) substituted isoxazolincarboxamides of the formula (I) or agrochemical acceptable salts thereof

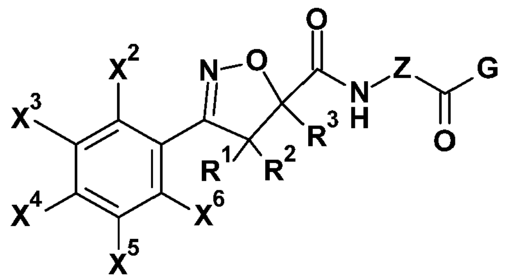

(I)

in which

G represents $OR^4$ or $NR^7R^8$
$R^1$ and $R^2$ each represent hydrogen;
$R^3$ represents (Ci-Cs)-alkyl, $(C_3-C_6)$-cycloalkyl, $(C_2-C_5)$-alkenyl, $(C_2-C_5)$-alkinyl or $(C_1-C_5)$-alkoxy each optionally substitued "m" times by substituents from the group consisting of halogen, cyano, (Ci-Cs)-alkoxy and hydroxy;
$R^4$ represents hydrogen,
or
represents $(C_1-C_{12})$-alkyl, $(C_3-C_7)$-cycloalkyl, $(C_3-C_7)$-cycloalkyl-$(C_1-C_8)$-alkyl, $(C_2-C_8)$-alkenyl, $(C_5-C_6)$-cycloalkenyl, $(C_1-C_4)$-alkylphenyl or $(C_2-C_8)$-alkinyl each optionally substitued "m" times by substituents from the group consisting of halogen, cyano, $(C_1-C_6)$-alkoxy, $(C_1-C_6)$-alkoxycarbonyl, hydroxy, $S(O)_nR^5$;
$R^5$ represents $(C_1-C_8)$-alkyl, $(C_2-C_8)$-alkenyl, $(C_3-C_6)$-cycloalkyl, benzyl, $CON((C_1-C_3)\text{-alkyl})_2$ or

$(C_1-C_8)$-alkyl-C(O)-$(C_1-C_8)$-alkyl each optionally substitued "m" times by substituents from the group consisting of halogen and cyano;
$R^6$ represents hydrogen,
or
represents $(C_1-C_8)$-alkyl, $(C_3-C_6)$-cycloalkyl, $(C_3-C_8)$-alkenyl or $(C_3-C_8)$-alkinyl each optionally substitued "m" times by substituents from the group consisting of halogen, cyano und $(C_1-C_2)$-alkoxy;
$R^7$, $R^8$ independently of each other represent hydrogen, $(C_1-C_6)$-alkoxycarbonyl-$(C_1-C_6)$-alkyl, $N((C_1-C_3)\text{-alkyl})_2$, $S(O)_nR^5$,
or
$R^7$ and $R^8$ together with the nitrogen atom to which they are attached form a saturated or partially or fully unsaturated five-, six-, or seven-membered ring which may contain apart from the nitrogen ataom "r" carbon atoms, "o" oxygen atoms and is optionally substitued "m" times by substituents from the group consisting of halogen, $(C_1-C_6)$-alkyl, halogen-$(C_1-C_6)$-alkyl, oxo, $CO_2R^6$;
Z represents Z-1 to Z-8:

-

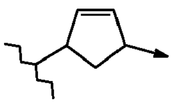
Z-1

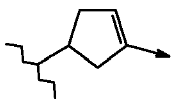
Z-2

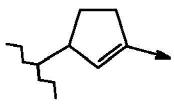
Z-3

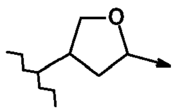
Z-4

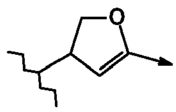

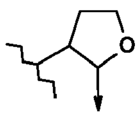
Z-6

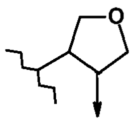
Z-7

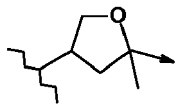
Z-8

V

whereas the arrow represents the bonding to the group CO-G of the formula (I);
$X^2$, $X^4$ and $X^6$ independently of one another represent hydrogen or fluorine;
$X^3$ and $X^5$ independently of one another represent hydrogen, chlorine, cyano or fluorine;
or
represents $(C_1-C_3)$-Alkyl, $(C_1-C_3)$-Alkoxy each optionally substitued "m" times by substituents from the group consisting of fluorine or chlorine;
m represents 0, 1, 2, 3, 4 or 5;
n represents 0, 1 or 2;
o represents 0, 1 or 2;
r represents 3, 4, 5 or 6;

and
(b) one or more of B1 to B35 specified in the table below:

| Compound-No. | Structure Name |
|---|---|
| B1 | ethyl 3-{2-chloro-4-fluoro-5-[3-methyl-2,6-dioxo-4-(trifluoromethyl)-3,6-dihydropyrimidin-1(2H)-yl]phenyl} -5 -methyl-4,5 -dihydro-1,2-oxazole-5 - carboxylate |
| B2 | 3-[2-chloro-5-(3,5-dimethyl-2,6-dioxo-4-sulfanylidene-1,3,5-triazinan-1-yl)-4-fluorophenyl]-5-methyl-4,5-dihydro-1,2-oxazole-5-carboxylic acid |
| B3 | methyl 2-{ [(E)-{ 2-chloro-4-fluoro-5-[3-methyl-2,6-dioxo-4-(trifluoromethyl)-3,6-dihydropyrimidin- 1(2H)-yl]benzylidene }amino]oxy}propanoate |
| B4 | methyl-(2R)-2-{ [(E)-{2-chloro-4-fluoro-5-[3-methyl-2,6-dioxo-4-(trifluoromethyl)-3,6-dihydropyrimidin- 1(2H)-yl]benzylidene }amino]oxy}propanoate |
| B5 | methyl-(2S)-2-{ [(E)-{2-chloro-4-fluoro-5-[3-methyl-2,6-dioxo-4-(trifluoromethyl)-3,6-dihydropyrimidin- 1(2H)-yl]benzylidene }amino]oxy}propanoate |
| B6 | trifludimoxazin |

(continued)

| Compound-No. | Structure Name |
|---|---|
| B7 | tiafenacil |
| B8 | methyl 3-{2-chloro-4-fluoro-5-[3-methyl-2,6-dioxo-4-(trifluoromethyl)-3,6-dihydropyrimidin-1(2H)-yl]phenyl}-3a,4,5,6-tetrahydro-6aH-cyclopenta[d][1,2]oxazole-6a-carboxylate |
| B9 | ethyl 3-{2-chloro-4-fluoro-5-[3-methyl-2,6-dioxo-4-(trifluoromethyl)-3,6-dihydropyrimidin-1(2H)-yl]phenyl}-3a,4,5,6-tetrahydro-6aH-cyclopenta[d][1,2]oxazole-6a-carboxylate |
| B10 | methyl 3-{2-chloro-4-fluoro-5-[3-methyl-2,6-dioxo-4-(trifluoromethyl)-3,6-dihydropyrimidin-1 (2H)-yl]phenyl}-6-methyl-3a,4,5,6-tetrahydro-6aH-cyclopenta[d][1,2]oxazole-6a-carboxylate |
| B11 | 3-{2-chloro-4-fluoro-5-[3-methyl-2,6-dioxo-4-(trifluoromethyl)-3,6-dihydropyrimidin-1(2H)-yl]phenyl}-6-methyl-3a,4,5,6-tetrahydro-6aH-cyclopenta[d][1,2]oxazole-6a-carboxylic acid |
| B12 | 3-{2-chloro-4-fluoro-5-[3-methyl-2,6-dioxo-4-(trifluoromethyl)-3,6-dihydropyrimidin-1(2H)-yl]phenyl}-3a,4,5,6-tetrahydro-6aH-cyclopenta[d][1,2]oxazole-6a-carboxylic acid |
| B13 | ethyl [(3-{2-chloro-5-[4-(1,1-difluoroethyl)-3-methyl-2,6-dioxo-3,6-dihydropyrimidin-1(2H)-yl]-4-fluorophenoxy}pyridin-2-yl)oxy]acetate |
| B14 | [(3-{2-chloro-5-[4-(1,1-difluoroethyl)-3-methyl-2,6-dioxo-3,6-dihydropyrimidin-1(2H)-yl]-4-fluorophenoxy}pyridin-2-yl)oxy]acetic acid |
| B15 | ethyl (2-{2-chloro-5-[4-(1,1-difluoroethyl)-3-methyl-2,6-dioxo-3,6-dihydropyrimidin-1(2H)-yl]-4-fluorophenoxy}phenoxy)acetate |
| B16 | (2-{2-chloro-5-[4-(1,1-difluoroethyl)-3-methyl-2,6-dioxo-3,6-dihydropyrimidin-1(2H)-yl]-4-fluorophenoxy}phenoxy)acetic acid |
| B17 | ethyl (2-{2-chloro-4-fluoro-5-[4-(1-fluoroethyl)-3-methyl-2,6-dioxo-3,6-dihydropyrimidin-1(2H)-yl]phenoxy}phenoxy)acetate |
| B18 | 2-methoxyethyl [(3-{2-chloro-5-[4-(1,1-difluoroethyl)-3-methyl-2,6-dioxo-3,6-dihydropyrimidin-1 (2H)-yl] -4-fluorophenoxy }pyridin-2-yl)oxy]acetate |
| B19 | tetrahydrofuran-2-ylmethyl [(3-{2-chloro-5-[4-(1,1-difluoroethyl)-3-methyl-2, 6-dioxo-3,6-dihydropyrimidin-1(2H)-yl]-4-fluorophenoxy}pyridin-2-yl)oxy]acetate |
| B20 | cyanomethyl [(3-{2-chloro-5-[4-(1,1-difluoroethyl)-3-methyl-2,6-dioxo-3,6-dihydropyrimidin-1(2H)-yl]-4-fluorophenoxy}pyridin-2-yl)oxy]acetate |
| B21 | methyl (2-{2-chloro-5-[4-(1,1-difluoroethyl)-3-methyl-2,6-dioxo-3,6-dihydropyrimidin-1(2H)-yl]-4-fluorophenoxylphenoxy)(methoxy)acetate |
| B22 | methyl (2-{2-bromo-5-[4-(1,1-difluoroethyl)-3-methyl-2,6-dioxo-3,6-dihydropyrimidin-1(2H)-yl]-4-fluorophenoxy}phenoxy)(methoxy)acetate |
| B23 | [(3-{2-bromo-5-[4-(1,1-difluoroethyl)-3-methyl-2,6-dioxo-3,6-dihydropyrimidin-1(2H)-yl]-4-fluorophenoxy}pyridin-2-yl)oxy]acetic acid |
| B24 | ethyl [(3-{2-bromo-5-[4-(1,1-difluoroethyl)-3-methyl-2,6-dioxo-3,6-dihydropyrimidin-1(2H)-yl]-4-fluorophenoxy}pyridin-2-yl)oxy]acetate |
| B25 | 2-methoxyethyl [(3-{2-bromo-5-[4-(1,1-difluoroethyl)-3-methyl-2,6-dioxo-3,6-dihydropyrimidin-1 (2H)-yl] -4-fluorophenoxy }pyridin-2-yl)oxy]acetate |
| B26 | tetrahydrofuran-2-ylmethyl [(3-{2-bromo-5-[4-(1,1-difluoroethyl)-3-methyl-2,6-dioxo-3,6-dihydropyrimidin-1(2H)-yl]-4-fluorophenoxy}pyridin-2-yl)oxy] acetate |
| B27 | 2-ethoxy-2-oxoethyl 1-{2-chloro-4-fluoro-5-[3-methyl-2,6-dioxo-4-(trifluoromethyl)-3,6-dihydropyrimidin-1(2H)-yl]phenoxy}cyclopropanecarboxylate |

(continued)

| Compound-No. | Structure Name |
|---|---|
| B28 | {[(1-{2-chloro-4-fluoro-5-[3-methyl-2,6-dioxo-4-(trifluoromethyl)-3,6-dihydropyrimidin-1 (2H)-yl]phenoxy} cyclopropyl)carbonyl]oxy} acetic acid |
| B29 | 2-methoxy-2-oxoethyl 1-{2-chloro-4-fluoro-5-[3-methyl-2,6-dioxo-4-(trifluoromethyl)-3,6-dihydropyrimidin-1(2H)-yl]phenoxy}cyclopropanecarboxylate |
| B30 | 1-ethoxy-1-oxopropan-2-yl 1-{2-chloro-4-fluoro-5-[3-methyl-2,6-dioxo-4-(trifluoromethyl)-3,6-dihydropyrimidin-1(2H)-yl]phenoxy}cyclopropanecarboxylate |
| B31 | 2-{ [(1-{2-chloro-4-fluoro-5-[3-methyl-2,6-dioxo-4-(trifluoromethyl)-3,6-dihydropyrimidin- 1(2H)-yl]phenoxy}cyclopropyl)carbonyl]oxy}propanoic acid |
| B32 | 1-methoxy-1-oxopropan-2-yl 1 - {2-chloro-4-fluoro-5-[3-methyl-2,6-dioxo-4-(trifluoromethyl)-3,6-dihydropyrimidin-1(2H)-yl]phenoxy}cyclopropanecarboxylate |
| B33 | 1-ethoxy-2-methyl-1-oxopropan-2-yl 1-{2-chloro-4-fluoro-5-[3-methyl-2,6-dioxo-4-(trifluoromethyl)-3,6-dihydropyrimidin-1(2H)-yl]phenoxy} cyclopropane carboxylate |
| B34 | 1-ethoxy-1-oxobutan-2-yl 1-{2-chloro-4-fluoro-5-[3-methyl-2,6-dioxo-4-(trifluoromethyl)-3,6-dihydropyrimidin-1(2H)-yl]phenoxy}cyclopropanecarboxylate |
| B35 | 1-(ethoxycarbonyl)cyclopropyl 1-{2-chloro-4-fluoro-5-[3-methyl-2,6-dioxo-4-(trifluoromethyl)-3,6-dihydropyrimidin-1(2H)-yl]phenoxy} cyclopropane carboxylate |

**2.** Combinations according to Claim 1, **characterized in that** compound of formula (**I**) is (**Ia**) or an agrochemical acceptable salts thereof

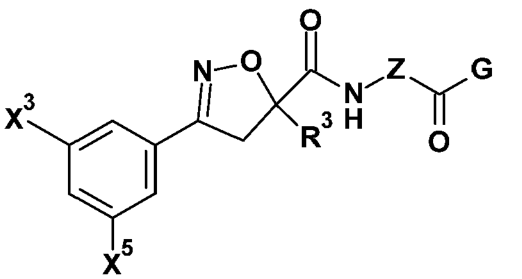

(Ia)

in which

$X^3$, $X^5$, $R^3$ and G are as described above;
Z means Z-1a, Z-1b, Z-2a, Z-3a, Z-4a, Z-5a, Z-6a, Z-7a, Z-8a,

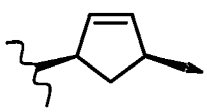

Z-1a

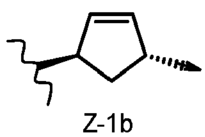

Z-1b

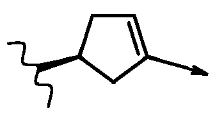

Z-2a

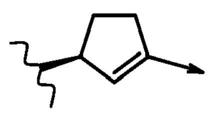

Z-3a

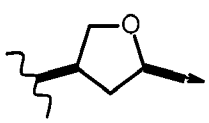

Z-4a

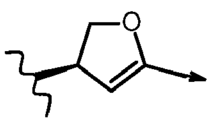

Z-5a

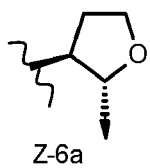

Z-6a

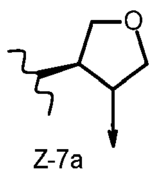

Z-7a

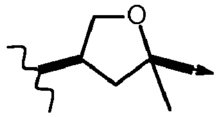

Z-8a

; wherein Z-4a means the mixture of both structures Z-4b and Z-4c;

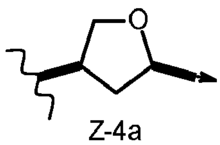 = 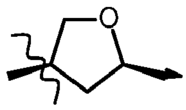 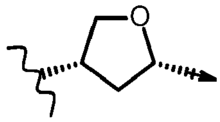

Z-4a Z-4b Z-4c

and wherein Z-8a means the mixture of both structures Z-8b and Z-8c

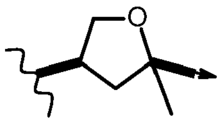 = 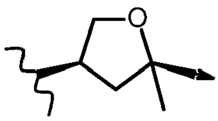 + 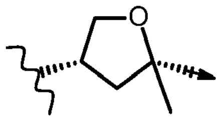

Z-8a Z-8b Z-8c

; and wherein the arrow means a bond to the group CO-G in formula (**Ia**).

**3.** Combinations according to claims 1 or 2 wherein the application rates of the herbicides are between 0.1 and 1000 g per ha, preferably between 0.1 and 100 g per ha.

**4.** Use of a combination according to any of claims 1 to 3 for controlling undesirable plants.

**5.** Method for controlling undesirable plants, **characterized in that** combinations according to any of claims 1 to 3 are allowed to act on the undesirable plants and/or their habitat.

**6.** Composition comprising in addition to a combination according to any of claims 1 to 2 surfactants and/or extenders.

**7.** Process for preparing a herbicidal composition according to claim 6, **characterized in that** a combination according to any of claims 1 to 2 is mixed with surfactants and/or extenders.

**8.** Method according to claim 5 wherein the crop is a genetically modified plant.

Europäisches Patentamt
European Patent Office
Office européen des brevets

# EUROPEAN SEARCH REPORT

Application Number
EP 24 15 5124

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/114932 A1 (BAYER AG [DE]) 11 June 2020 (2020-06-11) * the whole document * ----- | 1-8 | INV. A01N43/82 A01P13/02 |
| X | WO 2020/114934 A1 (BAYER AG [DE]) 11 June 2020 (2020-06-11) * the whole document * ----- | 1-8 | |
| | | | TECHNICAL FIELDS SEARCHED (IPC) |
| | | | A01N A01P |

The present search report has been drawn up for all claims

1

| Place of search | Date of completion of the search | Examiner |
|---|---|---|
| Munich | 17 June 2024 | Bertrand, Franck |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 15 5124

This annex lists the patent family members relating to the patent documents cited in the above-mentioned European search report. The members are as contained in the European Patent Office EDP file on The European Patent Office is in no way liable for these particulars which are merely given for the purpose of information.

17-06-2024

| Patent document cited in search report | Publication date | Patent family member(s) | Publication date |
|---|---|---|---|
| WO 2020114932 A1 | 11-06-2020 | AR 117260 A1 | 21-07-2021 |
| | | AU 2019392518 A1 | 24-06-2021 |
| | | BR 112021010094 A2 | 24-08-2021 |
| | | CA 3122156 A1 | 11-06-2020 |
| | | CL 2021001469 A1 | 19-11-2021 |
| | | CN 113347882 A | 03-09-2021 |
| | | DK 3890488 T3 | 03-04-2023 |
| | | EA 202191563 A1 | 28-10-2021 |
| | | EP 3890488 A1 | 13-10-2021 |
| | | ES 2941285 T3 | 19-05-2023 |
| | | FI 3890488 T3 | 30-03-2023 |
| | | HR P20230284 T1 | 12-05-2023 |
| | | HU E061391 T2 | 28-06-2023 |
| | | JP 2022511487 A | 31-01-2022 |
| | | KR 20210102295 A | 19-08-2021 |
| | | LT 3890488 T | 11-04-2023 |
| | | PH 12021551340 A1 | 13-12-2021 |
| | | PL 3890488 T3 | 02-05-2023 |
| | | PT 3890488 T | 11-04-2023 |
| | | SI 3890488 T1 | 31-05-2023 |
| | | US 2023032505 A1 | 02-02-2023 |
| | | WO 2020114932 A1 | 11-06-2020 |
| WO 2020114934 A1 | 11-06-2020 | AR 117259 A1 | 21-07-2021 |
| | | AU 2019393950 A1 | 24-06-2021 |
| | | BR 112021009734 A2 | 17-08-2021 |
| | | CA 3122157 A1 | 11-06-2020 |
| | | CL 2021001467 A1 | 19-11-2021 |
| | | CN 113329630 A | 31-08-2021 |
| | | EA 202191568 A1 | 28-10-2021 |
| | | EP 3890489 A1 | 13-10-2021 |
| | | ES 2942215 T3 | 30-05-2023 |
| | | JP 2022511488 A | 31-01-2022 |
| | | KR 20210102296 A | 19-08-2021 |
| | | PH 12021551338 A1 | 13-12-2021 |
| | | PL 3890489 T3 | 08-05-2023 |
| | | US 2022053762 A1 | 24-02-2022 |
| | | WO 2020114934 A1 | 11-06-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021139482 A1
- WO 2010145992 A1
- WO 2010038953 A1
- WO 2016095768 A1
- WO 2021143677 A1
- WO 2023285222 A1
- US 6403534 B1
- WO 2023228935 A1
- WO 2018228985 A1
- WO 2019145245 A1
- WO 2010038953 A2